# EUROPEAN PATENT SPECIFICATION

(11) **EP 3 367 494 B1**
(45) Date of publication and mention of the grant of the patent: **09.02.2022**
(21) Application number: 18156584.7
(22) Date of filing: 13.02.2018
(51) Int. Cl.: H01M 10/48

(54) **BATTERY MODULE**
BATTERIENMODUL
MODULE DE BATTERIE

(30) Priority: 28.02.2017 CN 201710112115
(43) Date of publication of application: 29.08.2018
(73) Proprietor: Contemporary Amperex Technology Co., Limited, Ningde City, Fujian 352100 (CN)
(72) Inventor: QIN, Feng, Ningde City, Fujian 352100 (CN); YOU, Zhiyi, Ningde City, Fujian 352100 (CN); MA, Lin, Ningde City, Fujian 352100 (CN); ZHANG, Jie, Ningde City, Fujian 352100 (CN); XIAO, Xinfu, Ningde City, Fujian 352100 (CN); WANG, Juan, Ningde City, Fujian 352100 (CN)
(74) Representative: KIPA AB

(56) References cited:
- EP-A1- 2 523 234
- WO-A1-2013/116044
- WO-A1-2015/013544
- WO-A1-2016/112411
- US-A1- 2016 036 032
- US-B1- 9 595 705

## Description

### TECHNICAL FIELD

The present application relates to the field of batteries and, particularly, relates to a battery module.

### BACKGROUND

At present a traditional battery module cannot meet the requirement of the IP67 protection grade, and the safety performance thereof has attracted a lot of attention. Besides, assembling and fixing manners of the cells also confront difficulties in developing the battery module.

In the related art, the top cover of an individual single cell is provided with safety structures such as an explosion-proof valve, deformable plate and the like, the cells are insulated from one another by adhering a blue tape, and then a plurality of aluminum shell cells are assembled in a series-parallel manner into a battery module, which not only increases the production procedures and the cost, but also reduces the energy density of the battery.

The energy density is generally increased by increasing the size of the aluminum shell cells in the related art, which in turn causes a risk in safety performance.

In addition, aluminum plastic film is used to encapsulate the cells in the related art.

However, problems still exist during encapsulating the cell with the aluminum plastic film. For example, the cells cannot meet the requirement of insulation and pressure resistance, the aluminum plastic film has low sealing reliability, and leakage of the cells readily occurs. Besides, in order to secure the sealing reliability of the side having assembled electrode tab of the aluminum plastic film, an external sealing edge of the electrode tab is generally not allowed to be bent, which causes a space waste and reduces the energy density.

In view of this, it is necessary to provide a battery module which is safe and has high energy density.

### SUMMARY

The object of the present application is to provide a battery module which is safe and has high energy density, so as to overcome the defects of the related art. The essential technical features of the invention are explicitly defined in the wording of independent claim 1 on file. Additional technical features of the invention are explicilty defined in the wording of dependent claims 2 to 8 on file.

In order to realize the object, the present application provides a battery module, including: a lower housing (10); a cell group (20) accommodated in the lower housing (10), wherein the cell group (20) includes a plurality of cells (200); a top cover (30) sealed from and connected to the lower housing (10), wherein the top cover (30) includes an upper plastic part (312), a lower plastic part (316), and a metal cover plate (314) located between the upper plastic part (312) and the lower plastic part (316); an explosion-proof valve (306) provided on the top cover (30); and a module output electrode (302) provided on the top cover (30), wherein the module output electrode (302) is electrically connected to the cell group (20); wherein each of the plurality of cells (200) comprises a cell lower housing (202), a bare cell accommodated in the cell lower housing (202), and an upper cover (206) sealed from and connected to the cell lower housing (202); and the lower housing (10) is made of metal, and both the cell lower housing (202) and the upper cover (206) are made of electrolyte solution-resistant plastics in such an encapsulating way that the assembled cell achieves a sealing and water-proof effect.

As an improvement of the battery module, the bare cell is electrically connected to an electrode terminal (210) provided on the cell by a soft connection (208), the electrode terminal (210) passes through the upper cover (206) and is fixed with the upper cover (206) by a first riveting aluminum block (214), and a sealing ring (212) is provided between the electrode terminal (210) and the upper cover (206).

As an improvement of the battery module, the battery module further includes a connection sheet (216) electrically connected to the plurality of cells (200).

As an improvement of the battery module, the battery module further includes: a voltage sampling terminal (220) provided on the connection sheet (216), wherein the voltage sampling terminal (220) passes through the top cover (30) and is fixed with and sealed from and connected to the top cover (30) by a screw nut (224), and a sealing ring (212) provided between the voltage sampling terminal (220) and the top cover (30).

As an improvement of the battery module, the lower plastic part (316) is a hollow frame structure and a position of the lower plastic part (316) corresponding to the connection sheet (216) and the voltage sampling terminal (220) is covered with an insulation separator.

As an improvement of the battery module, the module output electrode (302) includes a module electrode terminal (320), wherein the module electrode terminal (320) passes through the top cover (30) and is fixed with and sealed from the top cover (30) by a second riveting aluminum block (324), and wherein an insulation sealing ring (322) is provided between the module electrode terminal (320) and the top cover (30).

As an improvement of the battery module, the top cover (30) further includes a deformable plate (326), and the deformable plate (326) is configured to deform upwards to be electrically connected to the second riveting aluminum block (324) and the module electrode terminal (320) to form a protection loop when an internal pressure of the battery module is increased.

As an improvement of the battery module, a pouring sealant or an organic resin is filled in a gap between the lower housing (10) and the cell group (20).

Compared with the prior art, the battery module of the present application can achieve at least following beneficial effects: 1) safety structures such as the deformable plate (326) and the explosion-proof valve (306) are provided on the top cover (30), and the safety structure for each single cell upper cover (206) is eliminated, which simplifies the assembling, saves the cost, and improves the safety performance and the energy density; 2) the top cover (30) is sealed from and connected to the lower housing (10), which meets the requirement of IP67 protection grade and realizes the integration of the cell module; 3) the electrolyte solution-resistant non-metal insulation material is used to encapsulate the cells (200) themselves, which saves the cost, improves sealing reliability, meets the requirement of insulation and durability against pressure, and improves moisture-proof performance; 4) the pouring sealant or organic resin is filled in the gap between the lower housing (10) and the cell group (20), which fixes the cells (200) and the connection sheets (216), and prevents fracture of the cell encapsulation material due to a friction between the cells (200) and the lower housing (10).

### BRIEF DESCRIPTION OF DRAWINGS

The battery module of the present application and the beneficial effects thereof are illustrated in details as follows with reference to the accompanying drawings and the embodiments.
FIG. 1 illustrates a schematic diagram of an assembled battery module according to an embodiment of the present application.
FIG. 2 illustrates an exploded schematic diagram of a battery module according to an embodiment of the present application.
FIG. 3 illustrates an exploded schematic diagram of a top cover in a battery module according to an embodiment of the present application.
FIG. 4 illustrates an exploded schematic diagram of a cell in a battery module according to an embodiment of the present application.
FIG. 5 illustrates a schematic diagram of a cell group in a battery module according to an embodiment of the present application.
FIG. 6 illustrates a schematic diagram of a voltage sampling terminal in a battery module according to an embodiment of the present application.
FIG. 7 illustrates schematic diagram showing assembling of a lower plastic part and a cell group in a battery module according to an embodiment of the present application.
FIG. 8 illustrates a schematic diagram of a top cover in a battery module according to an embodiment of the present application.
FIG. 9 illustrates a cross-sectional diagram along line A-A in FIG. 8.
FIG. 10 illustrates a cross-sectional diagram along line B-B in FIG. 8.

### DESCRIPTION OF EMBODIMENTS

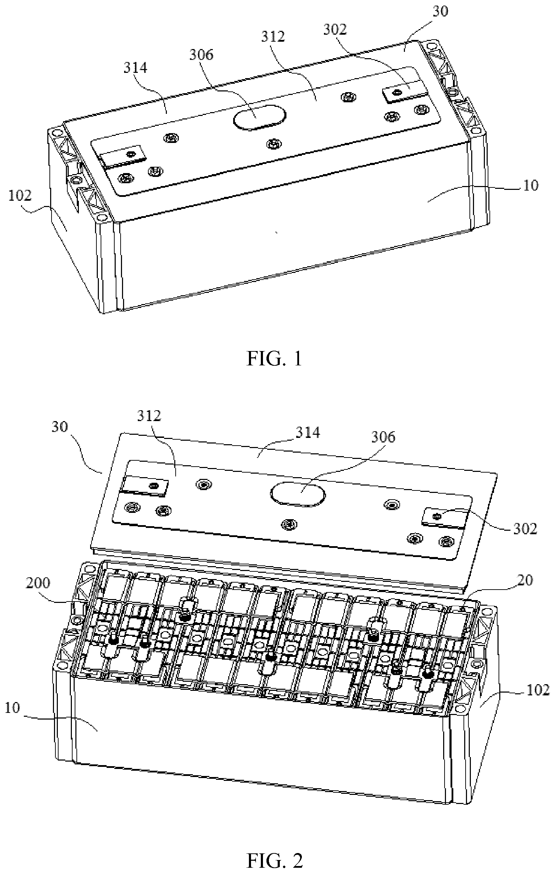

With reference to FIGS. 1, 3 and 5, the present disclosure provides a battery module. The battery module includes: a lower housing10; a cell group 20 accommodated in the lower housing 10, and a top cover 30 sealed from and connected to the lower housing 10. The cell group 20 includes a plurality of cells 200. The top cover 30 includes an upper plastic part 312, a lower plastic part 316, and a metal cover plate 314 located between the upper plastic part 312 and the lower plastic part 316. The top cover 30 is provided with an explosion-proof valve 306 and a module output electrode 302 electrically connected to the cell group 20. An end plate 102 is provided at each of two ends of the lower housing 10.

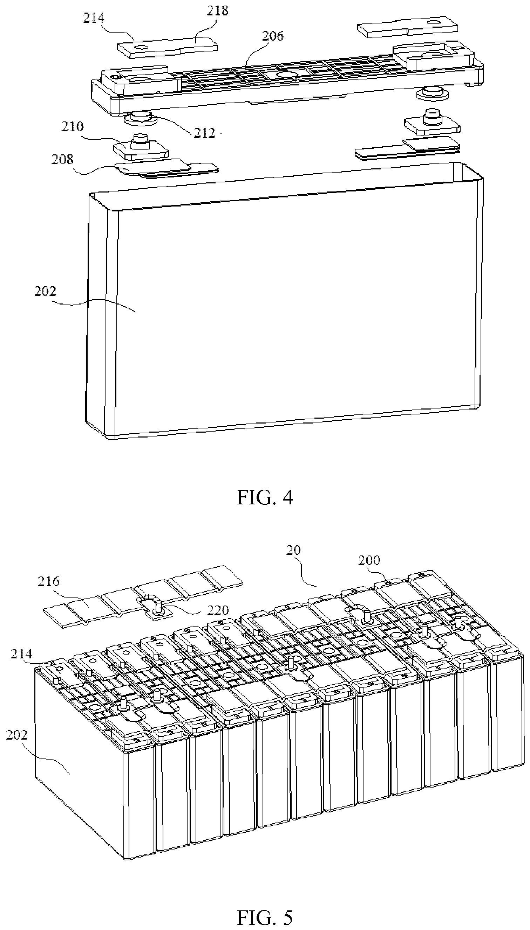

With reference to FIG. 4 and FIG. 5, the cell 200 includes a cell lower housing 202, a bare cell (not shown in the figures) accommodated in the cell lower housing 202, and an upper cover 206 sealed from and connected to the cell lower housing 202. The lower housing 10 is made of metal, and both the cell lower housing 202 and the upper cover 206 are made of electrolyte solution-resistant plastics in such an encapsulating way that the assembled cell can achieve a sealing and water-proof effect, thereby improving the safety performance of the whole battery module. The bare cell is electrically connected to an electrode terminal 210 provided on the cell 200 by a soft connection 208. The electrode terminal 210 passes through the upper cover 206 and is fixed with the upper cover 206 by a first riveting aluminum block 214. A sealing ring 212 is provided between the electrode terminal 210 and the upper cover 206. The soft connection 208 is welded to an electrode tab of the bare cell and the electrode terminal 210, thereby realizing electrical connection between the electrode tab and the electrode terminal 210. The first riveting aluminum block 214 and the electrode terminal 210 are assembled in a manner of riveting, and a position where the electrode terminal 210 passes through the upper cover 206 is sealed by compressing the sealing ring 212. Sealing of the whole cell housing is achieved in a manner of welding after the upper cover 206 and the cell lower housing 202 are assembled. A rectangular-shaped boss 218 extends from the first riveting aluminum block 214 along a long side of the upper cover 206, and the cell 200 is electrically connected to a connection sheet 216 by the rectangular-shaped boss 218.

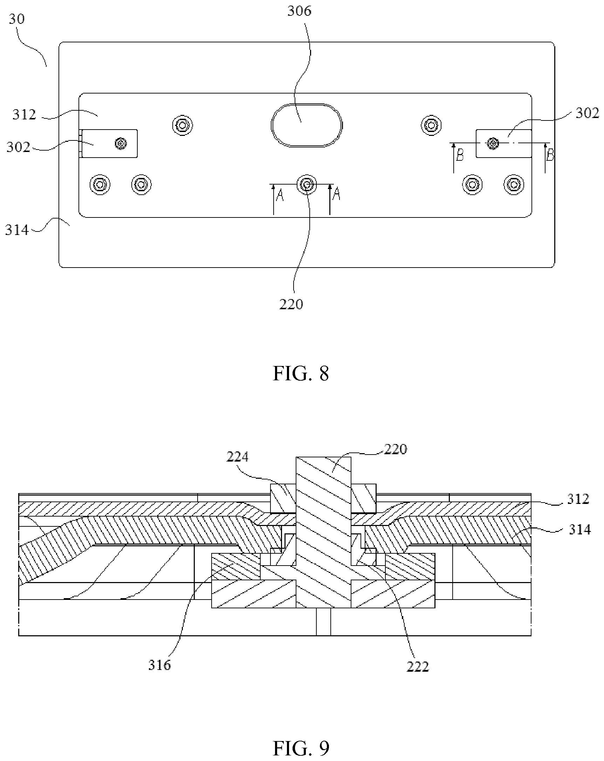

With reference to FIGS. 5, 6, 8 and 9, a voltage sampling terminal 220 is provided on the connection sheet 216; the voltage sampling terminal 220 passes through the top cover 30, and is sealed form and fixed with the top cover 30 by a screw nut 224. An insulation sealing ring 222 is provided between the voltage sampling terminal 220 and the top cover 30, and the screw nut 224 and the voltage sampling terminal 220 are screwed tightly to compress the insulation sealing ring 222, thereby sealing an opening for the voltage sampling terminal 220 in the top cover 30. The insulation of the voltage sampling terminal 220 from the top cover 30 is collectively achieved by the insulation sealing ring 222, the lower plastic part 316, and the upper plastic part 312.

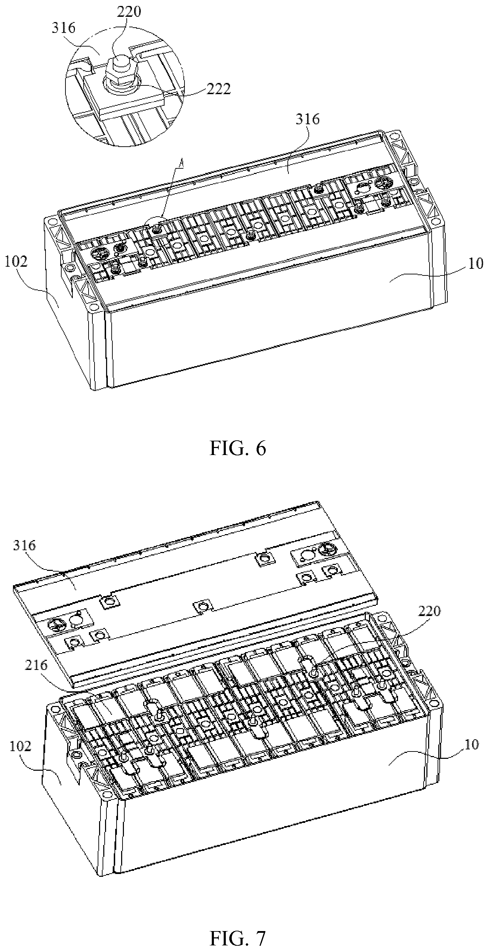

With reference to FIG. 7, the lower plastic part 316 is a hollow frame structure, a position of the lower plastic part 316 corresponding to the connection sheet 216 and the voltage sampling terminal 220 is covered by an insulation separator, for realizing insulation between the metal cover plate 314 and any one of the connection sheet 216 and the voltage sampling terminal 220.

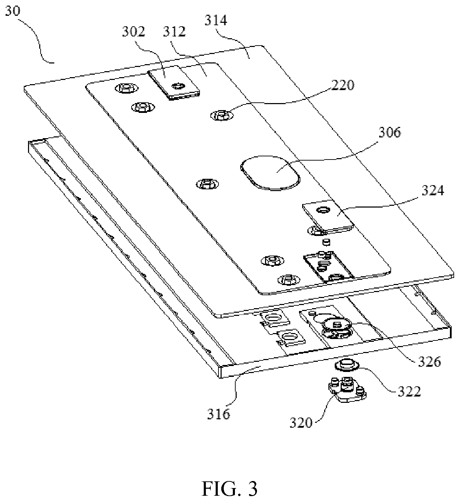

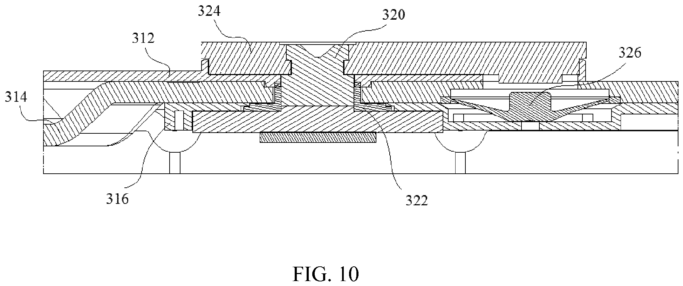

With reference to FIGS. 3, 8 and 10, the module output electrode 302 includes a module electrode terminal 320. The module electrode terminal 320 passes through the top cover 30 and is sealed from and fixed with the top cover 30 by a second riveting aluminum block 324. An insulation sealing ring 322 is provided between the module electrode terminal 320 and the top cover 30. The top cover 30 further includes a deformable plate 326. The deformable plate 326 is configured to deform upwards to be electrically connected to the second riveting aluminum block 324 and the module electrode terminal 320 to form a protection loop when an internal pressure of the battery module is increased.

After the assembling of the battery module is accomplished, a pouring sealant or other organic resin is filled in an gap between the lower housing 10 and the cell group 20, and the gap is fully filled so as to expel the remaining free space in the lower housing 10 after the cells 200 and other components are accommodated in the lower housing 10, for fixing the cells 200 and heat conduction.

Based on the embodiments of the present application as described above, compared with the related art, the battery module according to the present application at least achieves the following beneficial effects: 1) safety structures such as the deformable plate 326 and the explosion-proof valve 306 are provided on the top cover 30, and the safety structure for each single cell upper cover 206 is eliminated, which simplifies the assembling, saves the cost, and improves the safety performance and the energy density; 2) the top cover 30 is sealed from and connected to the lower housing 10, which meets the requirement of IP67 protection grade and realizes the integration of the cell module; 3) the electrolyte solution-resistant non-metal insulation material is used to encapsulate the cells themselves, which saves the cost, improves sealing reliability, meets the requirement of insulation and durability against pressure, and improves moisture-proof performance; 4) the pouring sealant or organic resin is filled in the gap between the lower housing 10 and the cell group 20, which fixes the cells 200 and the connection sheets 216, and prevents fracture of the cell encapsulation material due to a friction between the cells 200 and the lower housing 10.

## Claims

1. A battery module, **characterized in that**, the battery module comprises:
a lower housing (10);
a cell group (20) accommodated in the lower housing (10), wherein the cell group (20) comprises a plurality of cells (200);
a top cover (30) sealed from and connected to the lower housing (10), wherein the top cover (30) comprises an upper plastic part (312), a lower plastic part (316), and a metal cover plate (314) located between the upper plastic part (312) and the lower plastic part (316);
an explosion-proof valve (306) provided on the top cover (30); and
a module output electrode (302) provided on the top cover (30), wherein the module output electrode (302) is electrically connected to the cell group (20);
wherein each of the plurality of cells (200) comprises a cell lower housing (202), a bare cell accommodated in the cell lower housing (202), and an upper cover (206) sealed from and connected to the cell lower housing (202); and
the lower housing (10) is made of metal, and both the cell lower housing (202) and the upper cover (206) are made of electrolyte solution-resistant plastics in such an encapsulating way that the assembled cell achieves a sealing and water-proof effect.

2. The battery module according to claim 1, **characterized in that**, the bare cell is electrically connected to an electrode terminal (210) provided on the cell by a soft connection (208), the electrode terminal (210) passes through the upper cover (206) and is fixed with the upper cover (206) by a first riveting aluminum block (214), and a sealing ring (212) is provided between the electrode terminal (210) and the upper cover (206).

3. The battery module according to claim 1, **characterized in that**, the battery module further comprises a connection sheet (216) electrically connected to the plurality of cells (200).

4. The battery module according to claim 3, **characterized in that**, the battery module further comprises:
a voltage sampling terminal (220) provided on the connection sheet (216), wherein the voltage sampling terminal (220) passes through the top cover (30) and is fixed with and sealed from and connected to the top cover (30) by a screw nut (224), and
a sealing ring (212) provided between the voltage sampling terminal (220) and the top cover (30).

5. The battery module according to claim 4, **characterized in that**, the lower plastic part (316) is a hollow frame structure and a position of the lower plastic part (316) corresponding to the connection sheet (216) and the voltage sampling terminal (220) is covered with an insulation separator.

6. The battery module according to claim 1, **characterized in that**, the module output electrode (302) comprises a module electrode terminal (320), wherein the module electrode terminal (320) passes through the top cover (30) and is fixed with and sealed from the top cover (30) by a second riveting aluminum block (324), and wherein an insulation sealing ring (322) is provided between the module electrode terminal (320) and the top cover (30).

7. The battery module according to claim 6, **characterized in that**, the top cover (30) further comprises a deformable plate (326), and the deformable plate (326) is configured to deform upwards to be electrically connected to the second riveting aluminum block (324) and the module electrode terminal (320) to form a protection loop when an internal pressure of the battery module is increased.

8. The battery module according to any one of claims 1-7, **characterized in that**, a pouring sealant or an organic resin is filled in a gap between the lower housing (10) and the cell group (20).

## Patentansprüche

1. Ein Batteriemodul, **dadurch gekennzeichnet, dass** das Batteriemodul Folgendes umfasst:
ein unteres Gehäuse (10),
ein im unteren Gehäuse (10) untergebrachtes Zellenpack (20), wobei das Zellenpack (20) eine Mehrzahl von Zellen (200) umfasst,
eine gegenüber dem unteren Gehäuse (10) abgedichtete und mit diesem verbundene obere Abdeckung (30), wobei die obere Abdeckung (30) einen oberen Kunststoffteil (312), einen unteren Kunststoffteil (316) und eine metallische Abdeckplatte (314) zwischen oberem Kunststoffteil (312) und unterem Kunststoffteil (316) umfasst,
ein explosionsfestes Ventil (306) auf der oberen Abdeckung (30) und
eine Modulausgangselektrode (302) auf der oberen Abdeckung (30), wobei die Modulausgangselektrode (302) elektrisch mit der Zellengruppe (20) verbunden ist,
wobei jede Mehrzahl von Zellen (200) ein unteres Zellengehäuse (202), eine im unteren Zellengehäuse (202) untergebrachte blanke Zelle und eine gegenüber dem unteren Zellengehäuse (202) abgedichtete und mit diesem verbundene obere Abdeckung (206) aufweist und
das untere Gehäuse (10) aus Metall besteht und das untere Zellengehäuse (202) und die obere Abdeckung (206) aus Elektrolytlösung-beständigem Kunststoff bestehen und so kapselnd wirken, dass die eingebaute Zelle eine abdichtende und wasserdichte Wirkung erzielt.

2. Das Batteriemodul gemäß Anspruch 1, **dadurch gekennzeichnet, dass** die blanke Zelle über eine Soft-Verbindung (208) elektrisch an die Elektrodenklemme (210) angeschlossen ist, die Elektrodenklemme (210) durch die obere Abdeckung (206) geführt und über einen ersten vernieteten Aluminiumblock (214) und einen Dichtring (212) zwischen Elektrodenklemme (210) und oberer Abdeckung (206) an der oberen Abdeckung (206) befestigt ist.

3. Das Batteriemodul gemäß Anspruch 1, **dadurch gekennzeichnet, dass** das Batteriemodul weiterhin ein elektrisch mit der Mehrzahl von Zellen (200) verbundenes Verbindungsblech (216) aufweist.

4. Das Batteriemodul gemäß Anspruch 3, **dadurch gekennzeichnet, dass** das Batteriemodul weiterhin Folgendes umfasst:
eine auf dem Verbindungsblech (216) angebrachte Spannungsabtastklemme (220), wobei die Spannungsabtastklemme (220) durch die obere Abdeckung (30) geführt wird und an der oberen Abdeckung (30) befestigt, von dieser abgedichtet und elektrisch über eine Schraubenmutter (224) an diese angeschlossen ist, und
einen Dichtring (212) zwischen Spannungsabtastklemme (220) und oberer Abdeckung (30).

5. Das Batteriemodul gemäß Anspruch 4, **dadurch gekennzeichnet, dass** es sich bei dem unteren Kunststoffteil (316) um eine Hohlraumstruktur handelt und eine dem Verbindungsblech (216) und der Spannungsabtastklemme (220) entsprechende Position des unteren Kunststoffteils (316) von einer isolierenden Trennschicht bedeckt wird.

6. Das Batteriemodul gemäß Anspruch 1, **dadurch gekennzeichnet, dass** die Modulausgangselektrode (302) eine Modulelektrodenklemme (320) umfasst, wobei die Modulelektrodenklemme (320) durch die obere Abdeckung (30) geführt wird und über einen zweiten vernieteten Aluminiumblock (324) an der oberen Abdeckung (30) befestigt und von dieser abgedichtet ist und wobei sich ein isolierender Dichtring (322) zwischen Modulelektrodenklemme (320) und oberer Abdeckung (30) befindet.

7. Das Batteriemodul gemäß Anspruch 6, **dadurch gekennzeichnet, dass** die obere Abdeckung (30) weiterhin eine verformbare Platte (326) aufweist und die verformbare Platte (326) so ausgelegt ist, dass sie sich nach oben verformt und elektrisch mit dem zweiten vernieteten Aluminiumblock (324) und der Modulelektrodenklemme (320) verbunden wird und so einen Schutzkreis bildet, wenn sich der Innendruck des Batteriemoduls erhöht.

8. Das Batteriemodul gemäß einem der Ansprüche 1-7, **dadurch gekennzeichnet, dass** ein vergossener Dichtstoff oder ein organisches Harz in den Spalt zwischen unterem Gehäuse (10) und Zellenpack (20) gefüllt wird.

## Revendications

1. Module de batterie, **caractérisé en ce que**, le module de batterie comprend :
un logement inférieur (10) ;
un groupe de cellules (20) logé dans le logement inférieur (10), où le groupe de cellules (20) comprend une pluralité de cellules (200) ;
un couvercle supérieur (30) relié de manière hermétique au logement inférieur (10), où le couvercle supérieur (30) comprend une partie en plastique supérieure (312), une partie en plastique inférieure (316), et une plaque de couvercle métallique (314) située entre la partie en plastique supérieure (312) et la partie en plastique inférieure (316) ;
une soupape de sûreté (306) prévue sur le couvercle supérieur (30) ; et
une électrode de sortie de module (302) prévue sur le couvercle supérieur (30), où l'électrode de sortie de module (302) est électriquement reliée au groupe de cellules (20) ;
où chaque cellule de la pluralité de cellules (200) comprend un logement inférieur de cellule (202), une cellule nue logée dans le logement inférieur de cellule (202), et un couvercle supérieur (206) relié de manière hermétique au logement inférieur de cellule (202) ; et
le logement inférieur (10) est constitué de métal, et le logement inférieur de cellule (202) et le couvercle supérieur (206) sont tous deux constitués de matière plastique résistant à une solution d'électrolyte de manière à réaliser une encapsulation de telle sorte que la cellule assemblée atteint un effet d'étanchéité et d'imperméabilité à l'eau.

2. Module de batterie selon la revendication 1, **caractérisé en ce que**, la cellule nue est électriquement reliée à une borne d'électrode (210) prévue sur la cellule par une connexion tendre (208), la borne d'électrode (210) passe à travers le couvercle supérieur (206) et est fixée au couvercle supérieur (206) par un premier bloc de rivetage en aluminium (214), et une bague d'étanchéité (212) est prévue entre le borne d'électrode (210) et le couvercle supérieur (206).

3. Module de batterie selon la revendication 1, **caractérisé en ce que**, le module de batterie comprend en outre une feuille de connexion (216) électriquement reliée à la pluralité de cellules (200).

4. Module de batterie selon la revendication 3, **caractérisé en ce que**, le module de batterie comprend en outre :
une borne d'échantillonnage de tension (220) prévue sur la feuille de connexion (216), où la borne d'échantillonnage de tension (220) passe à travers le couvercle supérieur (30) et est fixée et reliée de manière hermétique au couvercle supérieur (30) par un écrou (224), et
une bague d'étanchéité (212) prévue entre la borne d'échantillonnage de tension (220) et le couvercle supérieur (30).

5. Module de batterie selon la revendication 4, **caractérisé en ce que**, la partie en plastique inférieure (316) est une structure de cadre creuse et une position de la partie en plastique inférieure (316) correspondant à la feuille de connexion (216) et à la borne d'échantillonnage de tension (220) est recouverte par un séparateur isolant.

6. Module de batterie selon la revendication 1, **caractérisé en ce que**, l'électrode de sortie de module (302) comprend une borne d'électrode de module (320), où la borne d'électrode de module (320) passe à travers le couvercle supérieur (30) et est fixée de manière hermétique au couvercle supérieur (30) par un second bloc de rivetage en aluminium (324), et où une bague d'étanchéité isolante (322) est prévue entre la borne d'électrode de module (320) et le couvercle supérieur (30).

7. Module de batterie selon la revendication 6, **caractérisé en ce que**, le couvercle supérieur (30) comprend en outre une plaque déformable (326), et la plaque déformable (326) est configurée pour se déformer vers le haut pour être électriquement reliée au second bloc de rivetage en aluminium (324) et à la borne d'électrode de module (320) afin de former une boucle de protection lorsqu'une pression interne du module de batterie augmente.

8. Module de batterie selon l'une quelconque des revendications 1 à 7, **caractérisé en ce que**, un matériau d'étanchéité à couler ou une résine organique est placé dans un espace entre le logement inférieur (10) et le groupe de cellules (20).
